Europäisches Patentamt

European Patent Office

Office européen des brevets

(11) Numéro de publication: **0 226 514**
**B1**

(12) **FASCICULE DE BREVET EUROPEEN**

(45) Date de publication du fascicule du brevet:
**24.10.90**

(21) Numéro de dépôt: **86402730.5**

(22) Date de dépôt: **09.12.86**

(51) Int. Cl.⁵: **H04L 27/20, H04L 27/12**

(54) **Dispositif de modulation d'une fréquence porteuse par sauts de phase ou de fréquence.**

(30) Priorité: **13.12.85 FR 8518524**

(43) Date de publication de la demande:
**24.06.87 Bulletin 87/26**

(45) Mention de la délivrance du brevet:
**24.10.90 Bulletin 90/43**

(84) Etats contractants désignés:
**BE DE GB IT NL SE**

(56) Documents cités:
**EP-A- 0 094 040**
**DE-A- 1 487 185**
**US-A- 3 909 750**

(73) Titulaire: **THOMSON-CSF, 51, Esplanade du Général de Gaulle, F-92800 Puteaux(FR)**

(72) Inventeur: **Kantorowicz, Gérard, THOMSON-CSF SCPI 19, avenue de Messine, F-75008 Paris(FR)**

(74) Mandataire: **El Manouni, Josiane et al, THOMSON-CSF SCPI, F-92045 PARIS LA DEFENSE CEDEX 67(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

EP 0 226 514 B1

## Description

La présente invention concerne un dispositif de modulation d'une fréquence porteuse par sauts de phase ou de fréquence, en vue de la transmission d'informations numériques entre un émetteur et un récepteur.

Elle concerne plus particulièrement un dispositif de modulation par sauts de phase ou de fréquence dans lequel le signal numérique $d(t)$ à transmettre, à deux niveaux, représentant les états logiques "0" et "1", est préalablement transformé en un signal à trois niveaux appelé signal "duobinaire". Cette transformation, appelée codage duobinaire, consiste à remplacer chaque bit du signal $d(t)$ par une valeur corrélée au bit précédent et permet d'obtenir une réduction du spectre occupé en bande de base par les informations à transmettre, tout en permettant une démodulation différentielle à la réception, avec les avantages qui s'y rattachent.

Ce signal duobinaire $s(t)$ est ensuite transformé en un signal modulé par sauts de phase ou de fréquence, de la forme $\cos(w_0 t + \phi(t))$, avec $w_0 = 2\pi f_0$, $f_0$ étant la fréquence porteuse et $\phi(t)$ contenant l'information à transmettre.

Une méthode de transformation possible, appelée codage en phase et en quadrature, et basée sur la décomposition du signal modulé sous la forme $\cos w_0 t \cos\phi(t) - \sin w_0 t \sin\phi(t)$, est décrite notamment dans un article intitulé "Correlative Phase Shift Keying - A class of Constant Envelope Modulation Techniques", publié dans la revue IEEE Transactions on Communications, Vol. COM. 29, n°3, Mars 1981. A chaque niveau possible du signal duobinaire $s(t)$ est associé un saut de phase $\Delta\phi(t)$, chaque état de phase $\phi(t)$ du signal étant représenté par un couple de valeurs $(\cos \phi(t), \sin \phi(t))$. L'ensemble de ces couples est stocké dans une mémoire morte adressée par le signal duobinaire. Les deux valeurs $\cos \phi(t)$ et $\sin \phi(t)$ obtenues en sortie de cette mémoire sont converties en valeurs analogiques, qui sont ensuite multipliées respectivement par les signaux $\cos w_0 t$ et $\sin w_0 t$ afin d'obtenir le signal modulé.

Cette méthode a pour inconvénient d'être relativement lente et complexe du fait même de l'utilisation d'une mémoire qui implique une logique d'adressage et un certain temps d'accès.

La présente invention a pour objet un dispositif de modulation présentant une plus grande rapidité de fonctionnement tout en étant très simple et facile à mettre en oeuvre.

Un dispositif de modulation d'une fréquence porteuse par sauts de phase ou de fréquence, suivant l'invention, comportant des moyens de codage duobinaire pour transformer le signal numérique d'entrée $d(t)$ à deux niveaux en un signal duobinaire $s(t)$ à trois niveaux associés chacun de façon bi-univoque à l'un des trois sauts de phase possibles $\Delta\phi$, des moyens de codage en phase et quadrature pour transformer ce signal duobinaire en un couple de signaux numériques $(x(t), y(t))$ correspondant au couple $(\cos \phi(t), \sin \phi(t))$ où $\phi(t)$ représente la phase instantanée du signal modulé, respectivement utilisés après conversion des niveaux logiques 0, 1 en niveaux analogiques -1, +1 pour moduler la porteuse et la porteuse déphasée de 90°, et des moyens pour additionner les signaux résultants afin d'obtenir le signal modulé, est essentiellement caractérisé en ce que les moyens de codage en phase et quadrature comportent deux registres à décalage bidirectionnels et rebouclés sur eux-mêmes, dans lesquels sont stockés, à l'intérieur de cellules de même rang, les couples de valeurs logiques : $x(t)$ pour le premier ensemble et $y(t)$ pour le deuxième ensemble, et qui sont commandés de façon identique par le signal duobinaire de manière à assurer un décalage soit dans un sens, soit dans l'autre, soit aucun décalage, suivant la valeur du saut de phase $\Delta \phi$ associée au niveau considéré du signal duobinaire.

D'autres objets et caractéristiques de la présente invention apparaîtront plus clairement à la lecture de la description suivante d'exemples de réalisation, faite en relation avec les dessins ci-annexés dans lesquels :

- la figure 1 est un schéma synoptique d'un dispositif de modulation par sauts de phase ;
- la figure 2 est un diagramme représentatif de la modulation de phase duobinaire pour un exemple particulier où les sauts de phase $\Delta \phi$ valent 0 ou $\pm \pi/2$ et les états de phase $\phi$ sont des multiples impairs de $\pi/2$;
- la figure 3 est un schéma des moyens de codage en phase et en quadrature suivant l'invention, dans le cas de l'exemple particulier considéré à la figure 2 ;
- la figure 4 est un diagramme représentant les formes d'onde en différents points des schémas des figures 1 et 3 ;

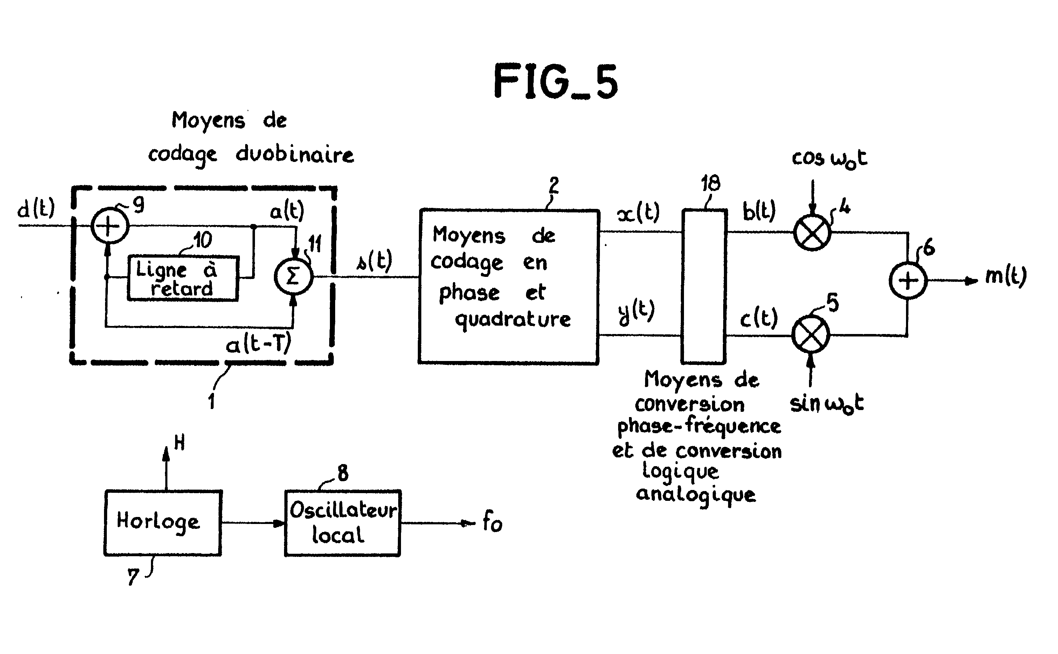

- la figure 5 est un schéma synoptique d'un dispositif de modulation par sauts de fréquence ;
- la figure 6 est un schéma des moyens de conversion phase-fréquence utilisés dans un dispositif de modulation par sauts de fréquence suivant l'invention ;
- la figure 7 est un diagramme représentant les formes d'onde en différents points des figures 5 et 6.

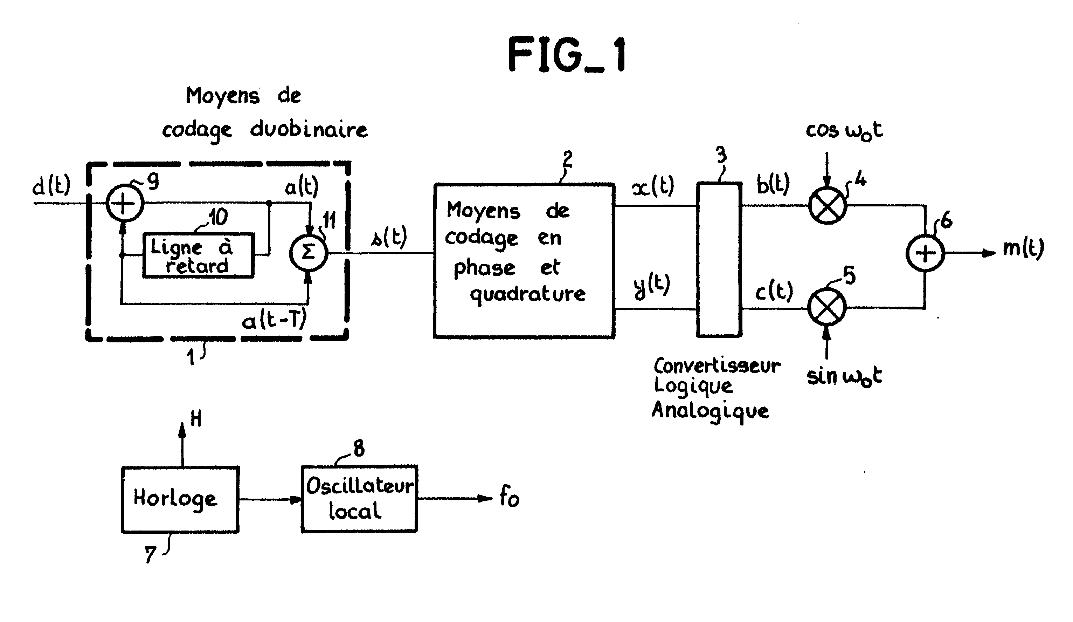

Le dispositif de modulation représenté sur la figure 1 comporte des moyens 1 de codage duobinaire pour transformer le signal binaire d'entrée $d(t)$ en un signal duobinaire $s(t)$, des moyens 2 de codage sur deux voies en phase et en quadrature pour transformer ce signal duobinaire $s(t)$ en un couple de signaux binaires $x(t)$ et $y(t)$, des moyens 3 de conversion des niveaux logiques 0, 1 en niveaux analogiques -1, 1, pour associer aux signaux binaires $x(t)$ et $y(t)$ des signaux analogiques $b(t)$ et $c(t)$ servant respective-

2

ment à moduler la porteuse -cos $w_0t$- et la porteuse déphasée de 90° -sin $w_0t$-respectivement dans un mélangeur 4 et dans un mélangeur 5, et un additionneur 6 pour additionner les signaux résultant afin d'obtenir le signal modulé m(t).

Pour être complet, le dispositif de modulation doit également comporter une horloge 7 fournissant un signal d'horloge H de fréquence $F = \pi/2$ permettant d'effectuer la modulation avec la période T de répétition des bits d'information du signal d'entrée d(t) et un oscillateur local 8 commandé par l'horloge 7 et fournissant la fréquence porteuse $f_0$.

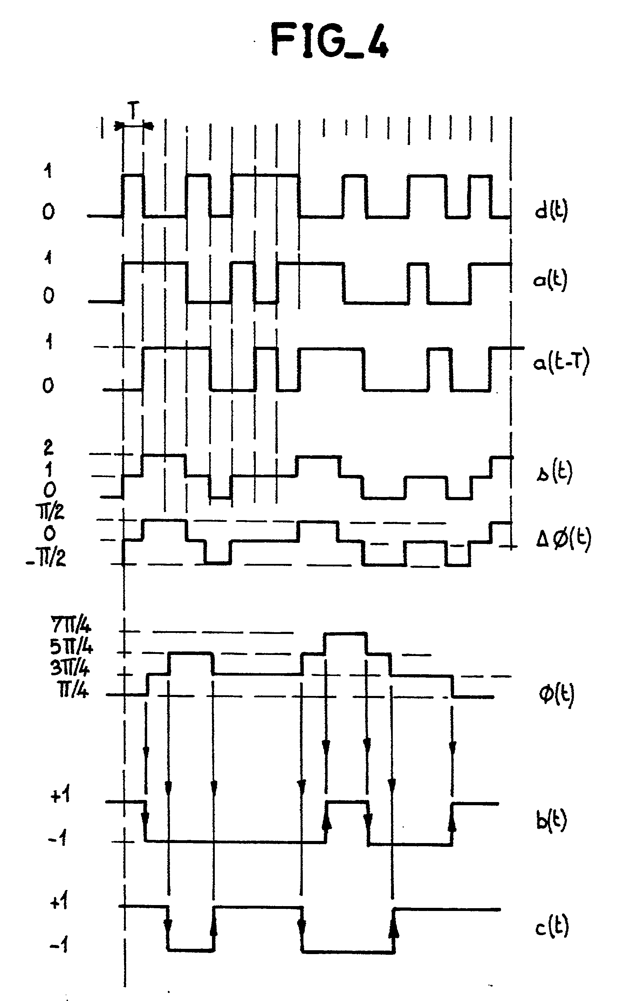

L'opération de codage duobinaire est illustrée sur la figure 4 qui représente, pour une succession donnée d(t) d'informations binaires suivant un format NRZ, un signal a(t) obtenu par codage différentiel en faisant une addition modulo 2, dans un additionneur 9, du signal d(t) et du signal a(t-T), qui est le signal a(t) retardé d'une période T au moyen d'une ligne à retard 10. Le signal a(t) ne présente ainsi une transition, soit de "0" vers "1", soit de "1" vers "0" que lorsque le message initial d(t) comporte un "1". Le message a(t) retardé d'une période T est ensuite additionné arithmétiquement à lui-même, au moyen d'un additionneur 11, pour réaliser le codage duobinaire tel que le niveau transmis soit la somme de deux bits consécutifs. Le signal duobinaire résultant s(t) peut prendre trois valeurs appelées "0", "1" et "2".

A titre d'exemple, la loi de modulation de la fréquence porteuse $f_0$ comporte soit un saut de phase $\Delta \phi(t) = \pm \pi/2$, soit pas de saut de phase, selon le tableau de correspondance suivant :

| s(t) | 0 | 1 | 2 |
|---|---|---|---|
| $\Delta \phi(t)$ | $-\frac{\pi}{2}$ | 0 | $+\frac{\pi}{2}$ |

A titre d'exemple la phase $\phi(t)$ peut prendre quatre valeurs possibles :

$$\phi(t) = \frac{\pi}{4}, \frac{3\pi}{4}, \frac{5\pi}{4}, \frac{7\pi}{4}$$

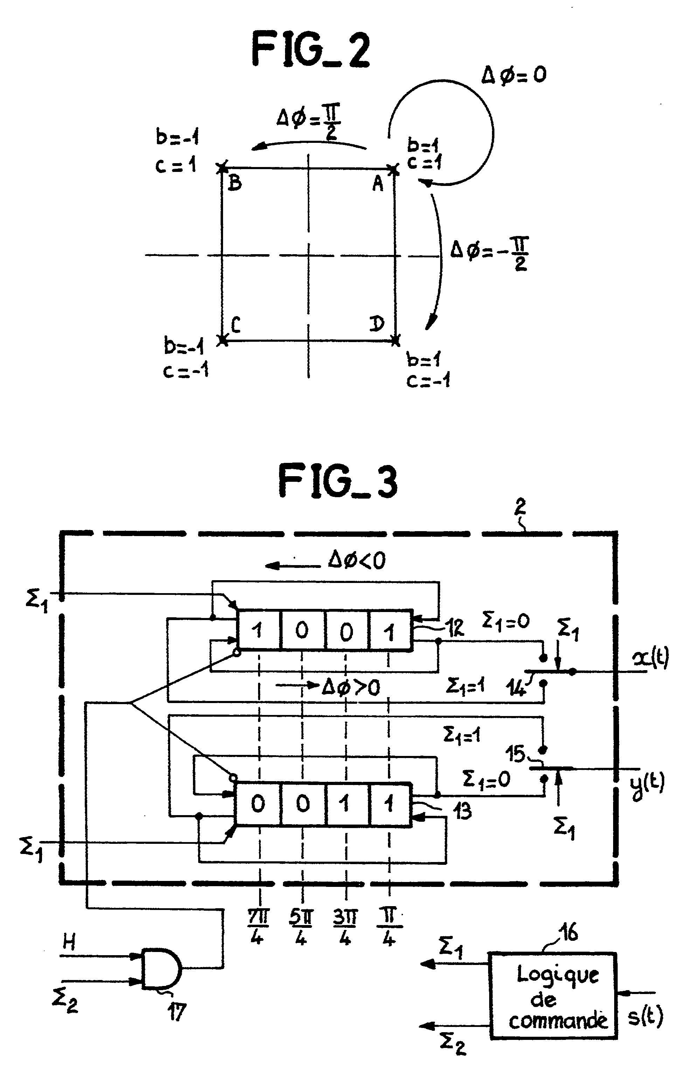

représentés par les points A, B, C, D du diagramme de Fresnel de la figure 2.

Le signal modulé m(t) s'écrit :
$m(t) = \cos[w_0t - \phi(t)] = b(t) \cos w_0t + c(t) \sin w_0t$

A chaque point et à chaque état de phase du diagramme de la figure 2 on peut associer un couple de valeurs b(t), c(t) choisies parmi les niveaux analogiques $\pm 1$ auquel correspond un couple de valeurs (x(t), y(t)) choisies parmi les niveaux logiques "0" ou "1". Le générateur des signaux b(t) et c(t) est conditionné pour permettre seulement le passage d'un état de phase à l'un des deux états de phase adjacents, et ceci par modification seulement de l'un des signaux b(t) et c(t) (ou, ce qui revient au même, de l'un des signaux x(t) et y(t)) en respectant le tableau suivant :

| b(t) | c(t) | $\phi(t)$ | x(t) | y(t) |
|---|---|---|---|---|
| 1 | 1 | $\frac{\pi}{4}$ | 1 | 1 |
| -1 | 1 | $\frac{3\pi}{4}$ | 0 | 1 |
| -1 | -1 | $\frac{5\pi}{4}$ | 0 | 0 |
| 1 | -1 | $\frac{7\pi}{4}$ | 1 | 0 |

Cette correspondance, entre un état de phase $\phi(t)$ et le couple [x(t), y(t)] associé, traduite sur le diagramme de Fresnel par une rotation directe, rétrograde ou nulle, suivant que $\Delta \phi(t)$ vaut respectivement $\pi/2$, - $\pi/2$ ou 0, est réalisée suivant l'invention par les moyens de codage sur les voies en phase et en quadrature représentés sur la figure 3.

Deux registres à décalage bidirectionnels 12 et 13 à quatre étages sont chargés, au cours de la période d'initialisation, par les couples de valeurs logiques possibles associées à x(t) et y(t), et sont rebouclés sur eux-mêmes. Le sens du décalage est associé au signe du saut de phase $\Delta \phi(t)$ : par exemple sur

EP 0 226 514 B1

de d'initialisation, par les couples de valeurs logiques possibles associées à x(t) et y(t), et sont rebouclés sur eux-mêmes. Le sens du décalage est associé au signe du saut de phase $\Delta \phi(t)$ : par exemple sur la figure 3 décalage à gauche pour $\Delta \phi (t)<0$, à droite pour $\Delta \phi (t)> 0$, l'horloge étant inhibée lorsque $\Delta \phi(t) = 0$. Sur chaque registre un commutateur, respectivement 14 et 15, permet de recueillir soit la sortie gauche, soit la sortie droite selon le sens du décalage. Les deux sorties x(t), y(t) fournissent le couple de valeurs binaires correspondant à la nouvelle valeur de la phase $\phi$ (t) après saut de phase $\Delta \phi(t)$.

Une logique de commande 16 fournit à partir du signal duobinaire s(t) deux signaux de commande des registres à décalage, $\Sigma_1$ de décalage, et $\Sigma_2$ d'inhibition, selon le tableau suivant:

| S(t) | 0 | 1 | 2 |
|---|---|---|---|
| $\Sigma_1$ | 1 | | 0 |
| $\Sigma_2$ | 1 | 0 | 1 |

La commande du sens de décalage des registres 12 et 13 est assurée par le signal $\Sigma_1$, et la commande de décalage est assurée en faisant un "ET" logique entre le signal $\Sigma_2$ et le signal d'horloge H au moyen d'une porte logique 17.

D'après l'expression :

$m(t) = \cos (w_0 t - \phi (t)) = b(t) \cos w_0 t + c(t) \sin w_0 t$

on a :

$b(t) = \cos \phi (t)$

et $c(t) = \sin \phi (t)$

Dans l'exemple considéré, où les états de phase possibles sont des multiples impairs de $\pi/4$, il y a toujours égalité, en valeur absolue, au coefficient multiplicateur

$$\frac{\sqrt{2}}{2}$$

près (dont il est facile de tenir compte ultérieurement) entre les valeurs analogiques b(t) et c(t), ce qui permet de les représenter simplement par les valeurs 1 et - 1 (soit, en numérique, 1 et 0), et donc de disposer d'un seul registre à décalage pour générer chacune de ces valeurs.

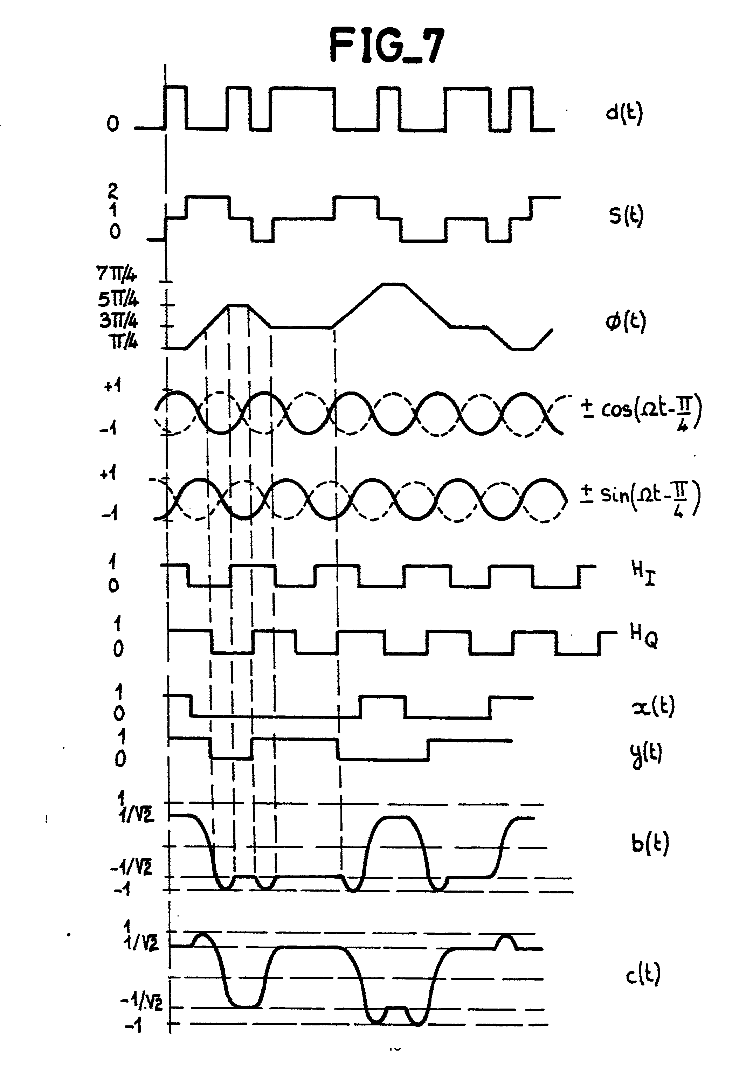

On peut transformer le dispositif de modulation par sauts de phase en dispositif de modulation par sauts de fréquence avec continuité de phase en intercalant entre les moyens 2 de codage en phase et quadrature et le modulateur de phase 4, 5 des moyens 18 de conversion phase-fréquence, ces moyens 18 incluant en l'occurrence les moyens de conversion des niveaux logiques 0, 1 en niveaux analogiques - 1, 1 désignés précédemment par la référence 3. Cette transformation permet de remplacer un saut de phase $\pm \pi/2$ par une variation linéaire de phase $\pm \pi/2$ t/T pour obtenir la forme d'onde $\phi(t)$ donnée par exemple à la figure 7.

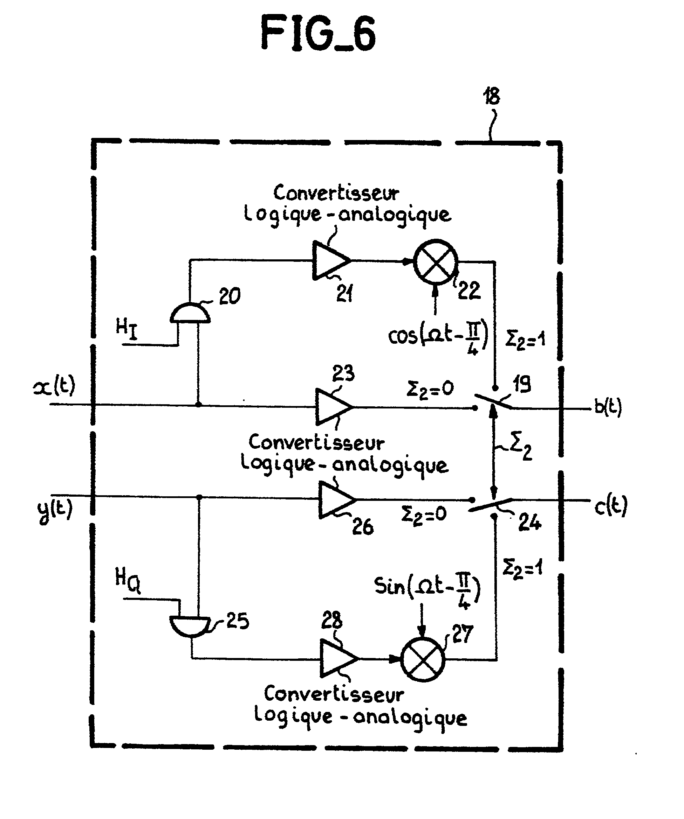

Un exemple de réalisation de ces moyens 18, adapté au schéma de la figure 3, est maintenant décrit en relation avec la figure 6.

La loi de modulation de la fréquence porteuse $f_0$ est alors telle que l'écart de fréquence $\Delta f$ (avec

représente l'opération de dérivation par rapport au temps), par rapport à la fréquence $f_0$ est donné par le tableau de correspondance suivant:

$$\Delta f \text{ (avec } \Delta f = \frac{d \Delta \phi(t)}{dt} \text{ où } \frac{d}{dt}$$

représente l'opération de dérivation par rapport au temps), par rapport à la fréquence $f_0$ est donné par le tableau de correspondance suivant:

| s(t) | 0 | 1 | 2 |
|---|---|---|---|
| $\Delta f$ | $-\frac{1}{4T}$ | 0 | $+\frac{1}{4T}$ |

Les moyens 18 de conversion phase-fréquence comportent deux voies : en phase et en quadrature à l'entrée desquelles sont respectivement appliqués le signal x(t) et le signal y(t).

4

Sur la voie en phase, par exemple, le signal entrant x(t) peut subir deux transformations différentes suivant la valeur affectée au signal d'inhibition $\Sigma_2$ par le signal duobinaire s(t), la sélection entre les deux étant assurée par un commutateur 19 disposé en sortie de voie et commandé par le signal $\Sigma_2$ (le signal $\Sigma_2$ étant généré par la logique de commande 16 de la figure 3).

Si $\Sigma_2$ = 1, c'est-à-dire s(t) = 0 ou 2 (phase non constante), la sortie de la voie en phase est obtenue en effectuant une modulation d'amplitude du signal b(t) (obtenu à partir du signal x(t) au moyen d'un convertisseur 21 effectuant une conversion niveau logique 0, 1 -niveau analogique -1, 1) par un signal cos ($\Omega t - \pi/4$) de période 4T au moyen d'un mélangeur 22. De même la sortie de la voie en quadrature est obtenue en effectuant une modulation d'amplitude du signal c(t) (obtenu à partir du signal y(t) au moyen d'un convertisseur 28 effectuant une conversion niveau logique 0, 1 - niveau analogique -1, 1) par un signal sin ($\Omega t - \pi/4$) de période 4T, au moyen d'un mélangeur 27.

Ceci permet d'assurer une transition linéaire entre les valeurs successives des signaux x(t), y(t) (ou b(t), c(t)) correspondant aux états de phase successifs $\phi$ (t), contrairement au cas de la modulation par sauts de phase où cette transition est instantanée.

En effet, les signaux b(t), c(t) représentant les signaux cos $\phi$(t), sin $\phi$(t), on voit sur le diagramme de Fresnel de la figure 2 que dans le cas de la modulation par sauts de fréquence, entre deux points consécutifs tels que A et B, et le signal cos $\phi$(t) varie de

$$+ \frac{1}{\sqrt{2}} \text{ à } - \frac{1}{\sqrt{2}}$$

en passant par la valeur 1, et le signal sin $\phi$(t) varie de

$$+ \frac{1}{\sqrt{2}} \text{ à } - \frac{1}{\sqrt{2}}$$

en passant par la valeur 1.

Suivant le sens de la rotation effectuée pour passer d'un point à un autre de ce diagramme, il est nécessaire de prévoir une multiplication du signal b(t) soit par la fonction + cos ($\Omega t - \pi/4$), soit par la fonction - cos ($\Omega t - \pi/4$), comme représenté sur le chronogramme de la figure 7 où la fonction + cos ($\Omega t - \pi/4$) est représentée en traits pleins et la fonction - cos ($\Omega t - \pi/4$) est représentée en pointillés. Ceci est réalisé en effectuant, préalablement à cette multiplication un "ET" logique entre le signal x(t) et un signal d'horloge $H_I$ de période 4T, au moyen d'une porte logique 20. De même sur la voie en quadrature, la sélection entre les fonctions + sin ($\Omega t - \pi/4$) et - sin ($\Omega t - \pi/4$) est effectuée en réalisant un "ET" logique, au moyen d'une porte "ET" 25, entre le signal y(t) et un signal d'horloge $H_Q$ de période 4T, déphasé de T par rapport au signal $H_I$.

Si $\Sigma_2$ = 0, c'est-à-dire s(t) = 1 (phase constante), les signaux x(t) et y(t) subissent uniquement la transformation logique-analogique suivante, effectuée respectivement au moyen de convertisseurs logique-analogique 23 et 26 :

| x(t), y(t) | b(t), c(t) |
|:---:|:---:|
| 0 | $- \dfrac{1}{\sqrt{2}}$ |
| 1 | $+ \dfrac{1}{\sqrt{2}}$ |

## Revendications

1. Dispositif de modulation d'une fréquence porteuse par sauts de phase ou de fréquence en vue de la transmission d'informations numériques entre un émetteur et un récepteur, comportant des moyens de codage duobinaire (1) pour transformer le signal numérique d'entrée (d(t)) à deux niveaux en un signal duobinaire (s(t)) à trois niveaux associés chacun de façon biunivoque à l'un des sauts de phase possibles $\Delta\phi$, des moyens de codage en phase et en quadrature (2) pour transformer ce signal duobinaire en un couple de signaux logiques x(t), y(t) correspondant au couple cos $\phi$(t), sin $\phi$(t) où $\phi$(t) représente la

EP 0 226 514 B1

gnaux résultants afin d'obtenir le signal modulé, caractérisé en ce que les moyens (2) de codage en phase et en quadrature comportent deux registres à décalage (12, 13) bidirectionnels et rebouclés sur eux-mêmes, dans lesquels sont stockés, à l'intérieur de cellules de même rang, les couples de valeurs logiques : x(t) pour le premier ensemble et y(t) pour le deuxième ensemble, et qui sont commandés de façon identique par le signal duobinaire de manière à assurer un décalage soit dans un sens, soit dans l'autre, soit aucun décalage, suivant la valeur du saut de phase $\Delta\phi$ associée au niveau considéré du signal duobinaire.

2. Dispositif selon la revendication 1, caractérisé en ce que dans le cas de la modulation par sauts de fréquence, il comporte en outre, en sortie des moyens de codage en phase et quadrature, des moyens de conversion phase-fréquence (18).

3. Dispositif selon la revendication 2, caractérisé en ce que les moyens de conversion phase-fréquence (18) comportent des moyens pour assurer une transition linéaire entre états successifs différents des signaux x(t), y(t) (ou b(t), c(t)), correspondant à des états de phase successifs $\phi(t)$ différents.

4. Dispositif selon la revendication 3, caractérisé en ce que la transition linéaire entre états de phase successifs $\phi(t)$ différents est assurée au moyen d'une modulation d'amplitude (22, 27) des signaux b(t) et c(t) respectivement par les fonctions $\pm \cos (\Omega t - \pi/4)$ et $\pm \sin (\Omega t - \pi/4)$, périodiques de période 4T, où T est la période de répétition des bits d'information du signal d'entrée d(t).

5. Dispositif selon la revendication 4, caractérisé en ce que la sélection entre les fonctions $+ \cos (\Omega t - \pi/4)$ et $\cos (\Omega t - \pi/4)$, respectivement $+ \sin (\Omega t - \pi/4)$ et $- \sin (\Omega t - \pi/4)$ est réalisée en effectuant, préalablement à la modulation d'amplitude, un "ET" logique (20, 25) entre le signal x(t) et un signal d'horloge $H_I$ de période 4T, respectivement entre le signal y(t) et un signal d'horloge $H_Q$ décalé de T par rapport au signal d'horloge $H_I$.

## Claims

1. A device for the modulation of a carrier frequency in phase or frequency jumps for the purpose of the transmission of digital information between a transmitter and a receiver, comprising duobinary encoding means (1) in order to transform the input digital signal (d(t)) with two levels into a duobinary signal (s(t)) with three levels respectively associated in a biunivocal manner with one of the possible phase jumps $\Delta\varnothing$, means (2) for encoding in phase and in quadrature in order to transform this duobinary signal into a pair of logical signals x(t) and y(t), corresponding to the pair $\cos \varnothing(t)$, $\sin \varnothing(t)$ wherein $\varnothing(t)$ represents the instantaneous phase of the modulated signal, respectively utilized after conversion into analog levels -1 and + 1 in order to modulate the carrier and the carrier phase-offset by 90°, and means in order to add the resulting signals to produce the modulated signal, characterized in that the means (2) for encoding in phase and in quadrature comprise two bidirectional looped shift registers (12 and 13), in which there are stored, in the interior of cells of the same order, the pairs of logical values: x(t) for the first group and y(t) for the second group , and which are controlled in an identical manner by the duobinary signal in such a manner as to ensure that there is a shift, either in one direction or in the other, or that there is no shift, in accordance with the value of the phase jump $\Delta\varnothing$ associated with the level, being considered, of the duobinary signal.

2. The device as claimed in claim 1, characterized in that in the case of modulation in frequency jumps it furthermore comprises, at the output of the means for encoding in phase and in quadrature, means for phase-frequency conversion (18).

3. The device as claimed in claim 2, characterized in that the means for phase frequency conversion (18) comprise means in order to ensure a linear transition between different successive states of the signals x(t), y(t) (or b(t), c(t)), corresponding to different successive phase states $\varnothing(t)$.

4. The device as claimed in claim 3, characterized in that the linear transition between successive phase states $\varnothing(t)$ is ensured by means of amplitude modulation (22 and 27) of the signals b(t) and c(t) respectively by the periodic functions $\cos\pm(\Omega t - \pi/4)$ and $\sin\pm(\Omega t - \pi/4)$ with a period of 4T, wherein T is the repetition period of the information bits of the input signal d(t).

5. The device as claimed in claim 4, characterized in that the selection between the functions $\pm \cos (\Omega t - \pi/4)$ and, respectively, $\pm \sin (\Omega t - \pi/4)$, is performed by carrying out, prior to the amplitude modulation, an "AND" operation (20 and 25) between the signal x(t) and a clock signal $H_1$ with a period of 4T, respectively between the signal y(t) and a cloßck signal $H_Q$ shifted by T in relation to the clock signal $H_1$.

## Patentansprüche

1. Vorrichtung zur Modulation einer Trägerfrequenz durch Phasen- oder Frequenzsprünge für die Übertragung von numerischer Informationen zwischen einem Sender und einem Empfänger, mit Duobinärkodierungsmitteln (1) zum Transformieren des numerischen Eingangssignals (d(t)) mit zwei Niveaus in ein duobinäres Signal (s(t)) mit drei Niveaus, die jeweils auf eindeutige Weise einem der möglichen Phasensprünge $\delta\varnothing$ zugeordnet sind, mit Mitteln (2) zur phasengleichen und phasenverschobenen Kodierung zur Transformation dieses duobinären Signals in ein Paar von Logiksignalen x(t), y(t), die dem Paar $\cos\varnothing(t)$, $\sin\varnothing(t)$, in dem $\varnothing(t)$ die momentane Phase des modulierten Signals darstellt, entsprechen und die nach der Umwandlung in Analogsignale -1, + 1 dazu verwendet werden, die Trägerfrequenz und die um 90° verschobene Trägerfrequenz zu modulieren, und mit Mitteln zum Addieren der sich ergebenden Signale, um das modulierte Signal zu erhalten, dadurch gekennzeichnet, daß die Mittel (2) zur phasengleichen und phasenverschobenen Kodierung zwei bidirektionale und mit sich selbst rückgekoppelte Schieberegister (12, 13) aufweisen, in denen in Zellen gleichen Ranges Paare von Logikwerten: x(t) für die erste Gruppe und y(t) für die zweite Gruppe, gespeichert werden und die auf identische Weise durch das duobinäre Signal derart gesteuert werden, daß entsprechend dem Wert des Phasensprungs δØ, der dem betreffenden Niveau des duobinären Signals zugeordnet ist, eine Phasenverschiebung entweder in einem Sinn oder im anderen oder ohne Verschiebung gewährleistet ist.

2. Vorrichtung gemäß Anspruch 1, dadurch gekennzeichnet, daß sie im Fall der Modulation durch Frequenzsprünge außerdem am Ausgang der Mittel zur phasengleichen und phasenverschobenen Kodierung Mittel zur Phasen/Frequenz-Umwandlung (18) aufweist.

3. Vorrichtung gemäß Anspruch 2, dadurch gekennzeichnet, daß die Mittel zur Phasen/Frequenz-Umwandlung (18) Mittel aufweisen, die zwischen den aufeinanderfolgenden, unterschiedlichen Zuständen der Signale x(t), y(t) (oder b(t), c(t)), die den aufeinanderfolgenden, unterschiedlichen Phasenzuständen Ø(t) entsprechen, einen linearen Übergang gewährleisten.

4. Vorrichtung gemäß Anspruch 3, dadurch gekennzeichnet, daß der lineare Übergang zwischen aufeinanderfolgenden, unterschiedlichen Phasenzuständen Ø(t) mittels einer Amplitudenmodulation (22, 27) von Signalen b(t) und c(t) durch die mit der Periode 4T periodische Funktion $\pm \cos(\Omega t - \pi/4)$ bzw. $+ \sin(\Omega t - \pi/4)$ gewährleistet wird, wobei T die Wiederholungsperiode der Informationsbits des Eingangssignals d(t) ist.

5. Vorrichtung gemäß Anspruch 4, dadurch gekennzeichnet, daß die Wahl zwischen den Funktionen $+ \cos(\Omega t - \pi/4)$ und $- \cos(\Omega t - \pi/4)$ bzw. $+ \sin(\Omega t - \pi/4)$ und $- \sin(\Omega t - \pi/4)$ verwirklicht wird, indem vor der Amplitudenmodulation zwischen dem Signal x(t) und einem Taktsignal $H_I$ der Periode 4T bzw. zwischen dem Signal y(t) und einem Taktsignal $H_Q$, das in bezug auf das Taktsignal $H_I$ um T verschoben ist, ein logisches UND (20, 25) ausgeführt wird.

# FIG_1

Moyens de codage duobinaire

d(t)

9

a(t)

10

Ligne à retard

11 Σ

a(t-T)

1

s(t)

2

Moyens de codage en phase et quadrature

x(t)

y(t)

3

Convertisseur Logique Analogique

b(t)

c(t)

cos ω₀t

4

sin ω₀t

5

6

m(t)

H

Horloge

7

8

Oscillateur local

f₀

EP 0 226 514 B1

EP 0 226 514 B1

# FIG_2

# FIG_3

# FIG_4

# FIG_5

EP 0 226 514 B1

# FIG_6

Convertisseur logique - analogique

$H_I$

$\cos\left(\Omega t - \frac{\pi}{4}\right)$   $\Sigma_2 = 1$

18

20

21

22

19

$x(t)$   $\Sigma_2 = 0$   $b(t)$

23

Convertisseur logique - analogique   $\Sigma_2$

$y(t)$   $\Sigma_2 = 0$   $c(t)$

26   24

$H_Q$   $\Sigma_2 = 1$

25   $\sin\left(\Omega t - \frac{\pi}{4}\right)$

28   27

Convertisseur logique - analogique

# FIG_7

$d(t)$

$S(t)$

$\phi(t)$

$\pm \cos(\Omega t - \frac{\pi}{4})$

$\pm \sin(\Omega t - \frac{\pi}{4})$

$H_I$

$H_Q$

$x(t)$

$y(t)$

$b(t)$

$c(t)$